# EUROPÄISCHE PATENTSCHRIFT

(11) **EP 2 465 753 B1**
(45) Veröffentlichungstag und Bekanntmachung des Hinweises auf die Patenterteilung: **28.05.2014**
(21) Anmeldenummer: 11008807.7
(22) Anmeldetag: 05.11.2011
(51) Int. Cl.: B62D 7/14

(54) **Steuerungsvorrichtung zur Steuerung zumindest eines hydraulischen Steuerzylinders**
Controller device for controlling at least one hydraulic control cylinder
Dispositif de commande pour la commande d'au moins un cylindre de commande hydraulique

(30) Priorität: 09.12.2010 DE 102010053920
(43) Veröffentlichungstag der Anmeldung: 20.06.2012
(60) Teilanmeldung: 13000299.1
(73) Patentinhaber: Hydac System GmbH, 66280 Sulzbach/Saar (DE)
(72) Erfinder: Bißbort, Markus, 66497 Contwig (DE); Petak, Christoph, 66280 Sulzbach (DE)
(74) Vertreter: Bartels & Partner

(56) Entgegenhaltungen:
- EP-A2- 1 529 717
- EP-A2- 2 336 003
- WO-A1-2006/061590
- WO-A1-2007/122102
- DE-A1- 3 902 810
- DE-A1- 19 510 208
- DE-A1- 19 803 745
- FR-A1- 2 859 440
- JP-A- 62 050 279
- US-A- 4 884 647
- WINTERHAGEN J: "NEUENTWICKLUNGEN BEI NUTZFAHRZEUGLENKUNGEN. ÖNEW DEVELOPMENTS IN STEERING SYSTEMS FOR COMMERCIAL VEHICLES", ATZ AUTOMOBILTECHNISCHE ZEITSCHRIFT, VIEWEG PUBLISHING, WIESBADEN, DE, Bd. 97, Nr. 7/08, 1. Juli 1995 (1995-07-01), XP000521273, ISSN: 0001-2785

## Beschreibung

Die Erfindung betrifft eine Steuerungsvorrichtung zur Steuerung zumindest eines hydraulischen Steuerzylinders, insbesondere für die Lenkung bei einem Fahrzeug mit einem Lenkzylinder, der von einem Lenkkolben in zwei Arbeitsräume unterteilt ist, und mit einem Zentrierzylinder, der über einen Zentrierkolben in zwei Schleppräume unterteilt ist, in denen jeweils ein Schleppkolben geführt ist und die fluidführend miteinander verbindbar sind, wobei der Zentrierkolben über den Lenkkolben mittels einer Steuereinrichtung ansteuerbar ist, wobei zumindest einer der Schleppräume an eine Druckregeleinrichtung anschließbar ist, die neben einer Druckmittelquelle ein Druckregelventil aufweist.

Hydraulische Hilfskraftlenkungen für Fahrzeuge, wie Personenkraftwagen oder Nutzkraftwagen, die eine Lenkhilfskraft auf gelenkte Räder einer Hauptlenkachse aufbringen, sind bekannt. Solche hydraulischen Hilfskraftlenkungen weisen neben einer Druckmittelpumpe insbesondere eine Steuerungsvorrichtung zur Steuerung zumindest eines hydraulischen Steuerzylinders auf, wobei die Steuerungsvorrichtung insbesondere ein Lenkventil mit offener oder geschlossener Mitte umfasst. Druckmittel wird hierbei nach Maßgabe eines von einem Fahrer an einer Lenkhandhabe des Fahrzeugs eingegebenen Soll-Lenkwinkels mittels des Lenkventils in den einen oder anderen Arbeitsraum des Lenkzylinders geführt, wobei ein Lenkkolben nebst Kolbenstange axial verfahren wird. Die dabei generierte Lenkhilfskraft wird über Spurstangen und Radlenkhebel auf die gelenkten Räder der betreffenden Achse aufgebracht. In diesem Zusammenhang sind auch Achsschemellenkungen bekannt.

Es sind ferner hydraulische Hilfskraftlenksysteme mit einer Vor- oder Nachlaufachse zusätzlich zu der gelenkten Hauptachse bekannt, insbesondere bei Lastkraftwagen oder gelenkten Anhängern oder Aufliegern oder in Form einer lenkbaren Achse eines Fahrzeugwagens, wie etwa eines zwei- oder mehrgliedrigen Gelenkomnibusses. Die Stellglieder einer solchen Zusatz-Lenkachse, wie etwa Lenkzylinder, sind hydraulisch oder mechanisch mit Stellgliedern der Hauptlenkachse zwangsgekoppelt. Dabei erfüllen Längsbewegungen an gelenkten Rädern solcher Vor- oder Nachlaufachsen die Ackermann-Bedingungen.

Die DE 10 2006 018 390 A1 zeigt und beschreibt ein hydraulisches Hilfskraftlenksystern für eine lenkbare Achse eines Fahrzeugs mit einem Arbeitszylinder, wobei Mittel zur Erkennung einer Betriebsstörung des Arbeitszylinders oder dessen Hydraulikkreislauf und Mittel zur Aufrechterhaltung eines Notlaufbetriebs im Falle einer erkannten Betriebsstörung vorgesehen sind. Um bei einer Betriebsstörung im Betrieb eines solchen Arbeits- oder Lenkzylinders einer Zusatz-Lenkachse ein gefahrloses Nachfolgen der Zusatz-Lenkachse zu der Hauptlenkachse zu ermöglichen, ist vorgesehen, dem betreffenden Arbeitszylinder einen zu- und abschaltbaren Zentrierzylinder zuzuordnen, wobei der Zentrierzylinder mittels einer Zwangskopplung mit dem Arbeitszylinder oder Lenkzylinder und den gelenkten Rädern der Zusatz-Lenkachse mechanisch wirkverbunden ist. Im störungsfreien normalen Betrieb des hydraulischen Hilfskraftlenksystems ist der Zentrierzylinder drucklos geschaltet. Im Störungsfall der hydraulischen Hilfskraftlenkung ist der Zentrierzylinder in der Lage, bei einer Druckmittelbeaufschlagung seiner Arbeitsräume eine Selbstzentrierung seines Zentrierkolbens vorzunehmen. Dadurch ist bewirkt, dass sich eine Geradeausstellung der gelenkten Räder der betreffenden Zusatzlenkachse in Fahrtrichtung ergibt. Bei Erkennung eines Ausfalls des Arbeitszylinder-Hydraulikkreislaufs durch eine Steuer- und/oder Regelungseinrichtung erfolgt eine Trennung des Arbeitszylinders der Zusatzlenkachse von dessen Druckmittelversorgung. Dadurch ist eine freie Bewegung des Arbeitskolbens des Arbeitszylinders gewährleistet. Zeitgleich wird der Zentrierzylinder mit Druckmittel beaufschlagt und dessen Kolben in eine gewünschte Neutralstellung gebracht, wodurch die gelenkten Räder der betreffenden Zusatzlenkachse in eine Geradeausstellung gebracht werden. Der Druckmittelbedarf des Zentrierzylinders ist nicht minimiert.

Zur Zentrierung eines Lenkkolbens eines Lenkzylinders im Störungsfall einer hydraulischen Hilfskraftlenkung ist für Zusatzlenkachsen ferner bekannt, einen Zentrierzylinder anzuwenden, dessen Zentrierkolben zu beiden Seiten von jeweils einem Schleppkolben umgeben ist. Die Schleppkolben können unabhängig voneinander auf der betreffenden Kolbenstange des Zentrierzylinders axial verfahren werden und durchfahren dabei zugeordnete Schleppräume. Der Zentrierkolben ist mit der Kolbenstange mit dem Lenkkolben des Lenkzylinders wirkverbunden.

Die bekannten Steuerungsvorrichtungen zur Steuerung zumindest eines hydraulischen Steuerzylinders für die Lenkung bei einem Fahrzeug und insbesondere deren Zentriersysteme, wie Zentrierzylinder, weisen einen nicht minimierten Druckmittelbedarf auf. Zudem bauen die bekannten Steuerungsvorrichtungen komplex auf.

Aus der EP 1 529 717 A2 geht eine Blockiervorrichtung für eine hydraulische Fahrzeug-Hinterachslenkung hervor. In einem Blockierzylinder sind ein Blockierkolben und ein Arbeitskolben angeordnet, zwischen denen ein Schwimmkolben vorgesehen ist.

Die EP 2 336 003 A2 zeigt eine hydraulische Lenkung für eine Vor- oder Nachlaufachse eines Fahrzeugs auf mit einem zweikammerigen Geberzylinder, dessen erste Kammer und dessen zweite Kammer über eine erste Hydraulikleitung und eine zweite Hydraulikleitung mit Kammern eines Nehmerzylinders zur Lenkwinkeleinstellung zumindest eines lenkbaren Rades an der Vor- oder Nachlaufachse fluidführend verbunden sind, wobei die hydraulische Lenkung eine Einrichtung zur Überlagerung der Fluidströme von dem Geberzylinder zu dem Nehmerzylinder mittels eines Zusatzfluidstroms aufweist. Die Einrichtung weist ferner einen Zumesszylinder zur Bereitstellung des Zusatzfluidstromes auf.

Die US-A-4 884 647 zeigt eine gattungsbildende Lenkung mit einem fest eingestellten Druckreduzierventil für den Druck in den Schleppräumen.

Ausgehend von diesem Stand der Technik liegt der Erfindung die Aufgabe zugrunde, eine Steuerungsvorrichtung zur Steuerung zumindest eines hydraulischen Steuerzylinders für die Lenkung eines Fahrzeugs anzugeben, deren Druckmittelbedarf verringert und deren konstruktiver Aufwand minimiert ist.

Die dahingehende Aufgabe wird durch eine Steuerungsvorrichtung mit den Merkmalen des Patentanspruches 1 in seiner Gesamtheit gelöst.

Erfindungsgemäß ist vorgesehen, dass das Druckregelventil der Druckregeleinrichtung ein vorgesteuertes Druckreduzierventil ist, wobei Druckmittel aus den Schleppräumen über das vorgesteuerte Druckreduzierventil in einen Tank lenkbar ist. Dadurch lässt sich der Druckmitteldruck in den Schleppräumen des Zentrierzylinders und somit auch die Verfahrgeschwindigkeit der Schleppkolben bei einem Störfall der Steuerungsvorrichtung auf die Fahrzeugcharakteristik des betreffenden Fahrzeugs anpassen.

Weiterhin kann vorgesehen sein, zumindest einen der Schleppräume des Zentrierzylinders von einer Druckregeleinrichtung anzusteuern, die zumindest eine Druckmittelquelle und ein Druckregelventil aufweist, wobei die Druckregeleinrichtung zumindest einen Schleppraum des Zentrierzylinders mit einem Vorspanndruck beaufschlagt. Im Störungsfall der Steuerungsvorrichtung ist dabei sichergestellt, dass sich zumindest ein Schleppkolben in Mittelstellung befindet. Wird von der betreffenden Druckmittelquelle der Druckregeleinrichtung zumindest einer der Schleppräume schlagartig mit Druckmittel beaufschlagt, gelangt auch der weitere Schleppkolben an den Zentrieranschlag. Die Zentrierkolben werden von dem Fluiddruck in den entsprechenden Schleppräumen zusammen mit der Kolbenstange und dem Zentrierkolben in eine mittige Neutralstellung verfahren. Durch die Kopplung der Kolbenstange des Zentrierzylinders mit dem Lenkkolben bzw. die Kopplung der Kolbenstange mit den gelenkten Rädern der Zusatz-Lenkachse erfolgt unmittelbar eine Neutralstellung der gelenkten Räder der Zusatz-Lenkachse. Durch diese erfindungsgemäße konstruktive Maßnahme ist vorteilhaft bewirkt, dass der Zentriervorgang des gesamten Steuerzylinders aus Lenkzylinder und Zentrierzylinder mit lediglich einem Druckmitteleinsatz, der der Hälfte des gesamten Druckmittelvolumens des Zentrierzylinders entspricht, bewirkt ist. Dadurch ist bei Anwendung eines Druckspeichers als Druckmittelquelle vorteilhaft bewirkt, dass der Druckspeicher bzw. das Volumen des Druckspeichers, der den Schleppräumen des Zentrierzylinders zugeordnet ist, im Vergleich zum bekannten Stand der Technik auf durchaus die Hälfte reduziert werden kann.

Es kann auch zweckmäßig sein, den an dem Druckreduzierventil eingestellten Druckmitteldruck an weitere Fahrzeugparameter oder auch an aktuelle Fahrtparameter, wie etwa die Fahrzeuggeschwindigkeit, anzupassen.

Konstruktiv besonders einfach und zudem bauraumsparend lässt sich die Steuereinrichtung dahingehend ausbilden, dass eine gemeinsame Kolbenstange, die den Lenkkolben mit dem Zentrierkolben fest verbindet, vorgesehen ist. Dabei ist es zweckmäßig, den Zentrierzylinder und den Lenkzylinder als Bestandteile des Steuerzylinders in einem gemeinsamen Gehäuse anzuordnen, wobei der Zentrierzylinder und der Lenkzylinder, in Bewegungsrichtung der Kolbenstange gesehen, hintereinander angeordnet sind. Die Arbeitsräume des Lenkzylinders sind hierbei von den Schleppräumen oder Arbeitsräumen des Zentrierzylinders über eine Gehäusetrennwand voneinander getrennt. Die Schleppräume des Zentrierzylinders und die Gehäusetrennwand sind dabei von der Kolbenstange in jeder ihrer Verfahrstellungen durchgriffen. In jedem Schleppraum des Zentrierzylinders befindet sich ein Schleppkolben und zwischen den beiden Schleppkolben der Zentrierkolben des Zentrierzylinders. Die Schleppkolben sind dichtend und gleitend auf der Kolbenstange angeordnet und können unabhängig von deren aktuellen Position relativ zu dieser und relativ zu dem Zentrierkolben axial verfahren werden. In einer Neutralstellung des Lenk- und Zentrierzylinders, in der der Zentrierkolben an der Kolbenstange in einer axialen Mittenposition des Zentrierzylinders sich befindet und die Schleppkolben an den Zentrierkolben zu beiden Seiten anliegen, weisen die Schleppräume des Zentrierzylinders im Wesentlichen gleiche Volumina auf. Der Zentrierkolben befindet sich in dieser Neutralstellung in einer Mittenkammer des Gehäuses des Zentrierzylinders. Die Mittenkammer ist über eine fluidführende Verbindung mit einem Tank verbunden. Dadurch ist gewährleistet, dass bei einer Verfahrbewegung eines der Schleppkolben oder beider Schleppkolben über die fluidführende Verbindung aus dem Tank stets luftblasenfreies Druckmittel in oder aus der Mittenkammer geführt werden kann. Die fluidführende Verbindung kann hierbei die Verfahrbewegung der Schleppkolben dämpfen.

Die jeweiligen Schleppräume des Zentrierzylinders auf der der Mittenkammer gegenüberliegenden Stirnseite des Schleppkolbens sind über eine Ausgleichsleitung derart miteinander in Verbindung stehend, dass in jeder Verfahrstellung der Schleppkolben eine fluidführende Verbindung zwischen den beiden Schleppräumen hergestellt ist. Der dem freien Ende der Kolbenstange zugeordnete oder benachbarte Schleppraum des Zentrierzylinders weist eine Anschlussstelle für das Druckregelventil und den Druckspeicher der dahingehenden Druckregeleinrichtung auf. Im Störfall der Steuerungsvorrichtung kann somit Druckmittel über den, dem freien Ende der Kolbenstange zugeordneten Schleppraum über die Ausgleichsleitung in den, dem freien Ende der Kolbenstange abgewandten Schleppraum geführt werden, so dass in jedem Fall unabhängig von der momentanen Verfahrstellung des Zentrierkolbens und der Schleppkolben die beiden Schleppkolben die Kolbenstange mit ihrem Zentrierkolben in eine mittige Neutralstellung verbringen können. In einer besonders kompakten bauraumsparenden Ausführungsform der Steuerungsvorrichtung, die zudem einfach herstellbar ist, weisen der Lenkkolben und die Schleppkolben im Wesentlichen denselben Außendurchmesser auf. In einer Neutralstellung von Lenk- und Zentrierkolben weisen zudem alle Arbeitsräume und Schleppräume der betreffenden Zylinder im Wesentlichen das gleiche Fluidvolumen auf. Die Arbeitsräume des Lenkzylinders sind in an sich bekannter Weise hierbei über ein Lenkventil mit einer Druckmittelversorgungseinheit verbunden.

Die Steuerungsvorrichtung nebst dem Zentrierzylinder wird von einer Steuer- und/oder Regelungseinrichtung angesteuert in Abhängigkeit von Signalen von Sensoren zur Positionsüberwachung der Hauptlenkachse des Fahrzeugs und von Fahrt- und Fahrzeugparametern des betreffenden Fahrzeugs. Dabei kann auch eine Mehrzahl an hydraulischen Steuerzylindern angesteuert sein. Beim Erkennen einer Fehlfunktion der Steuerungsvorrichtung wird zumindest ein Schleppraum des Zentrierzylinders mit Druckmittel durch die Druckregeleinrichtung beaufschlagt, wodurch der betreffende Schleppkolben in dem Schleppraum an den Zentrierkolben angelegt wird und unter Mitnahme des Zentrierkolbens nebst Kolbenstange wiederum an einen Mittenanschlag der Mittenkammer des Zentrierzylinders angelegt wird. Der Mittenanschlag definiert eine Neutralstellung der Kolbenstange. Die Druckmittelquelle der Druckregeleinrichtung kann sowohl ein Druckspeicher (Kolbenspeicher oder Membranspeicher) oder auch eine Druckmittelpumpe sein. Zur Überprüfung der Funktionsfähigkeit der Steuerungsvorrichtung vor Betriebsbeginn oder auch während des Betriebes ist in einem besonders bevorzugten Ausführungsbeispiel eine Testeinrichtung vorgesehen, mit der zumindest eine einkanalige Sicherheitsfunktion gemäß dem SIL2-Standard realisiert ist. Dabei können insbesondere alle Ventile der Steuerungsvorrichtung und auch die Leckagefreiheit des Steuerzylinders überprüft werden.

Im Folgenden wird die erfindungsgemäße Steuerungsvorrichtung anhand eines Ausführungsbeispiels nach der Zeichnung näher beschrieben. Dabei zeigen in prinzipieller und nicht maßstäblicher Darstellung die
- Fig.1a: einen Längsschnitt durch einen erfindungsgemäßen Steuerzylinder;
- Fig.1b: einen weiteren Längsschnitt durch den Steuerzylinder in Fig.1a in einer Endstellung seiner Kolbenstange;
- Fig.1c: einen weiteren Längsschnitt durch den erfindungsgemäßen Steuerzylinder in Fig.1a in einer der in Fig.1b gezeigten gegenüberliegenden Endstellung der Kolbenstange;
- Fig.1d: einen weiteren Längsschnitt durch den erfindungsgemäßen Steuerzylinder, bei dem der in Betrachungsrichtung der Fig.1d linke Schleppraum des Zentrierzylinders mit Druckmittel durch einen Druckspeicher beaufschlagt ist;
- Fig.1f: einen weiteren Längsschnitt durch den erfindungsgemäßen Steuerzylinder in einer Neutralstellung seines Lenkkolbens und Zentrierkolbens sowie in einer Neutralstellung seiner Schleppkolben;
- Fig.2: ein schematisches Schaltbild eines Ausführungsbeispiels der Steuerungsvorrichtung.

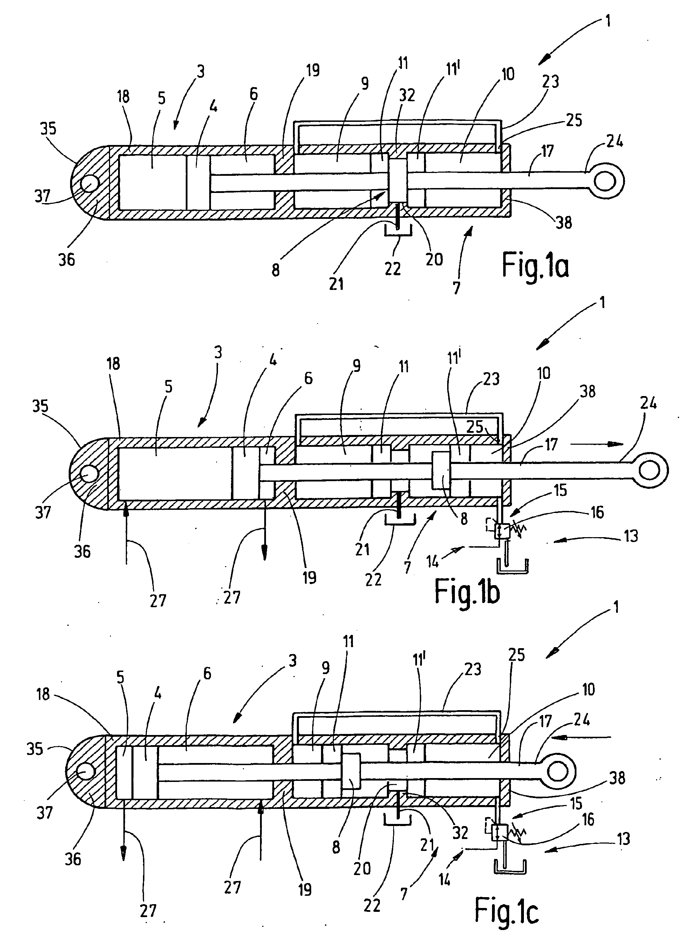

In den Fig. 1a bis 1f ist eine hydraulische Steuerungsvorrichtung 1 zur Steuerung zumindest eines hydraulischen Steuerzylinders 2 zum Zwecke der Bereitstellung einer Lenkhilfskraft für nicht gezeigte gelenkte Räder einer Zusatz-Lenkachse eines Nutzkraftwagens gezeigt. Der Steuerzylinder 2 ist als Einheit von in einem einzigen Gehäuse 18 untergebrachten Lenkzylinder 3 und einem Zentrierzylinder 7 gebildet. Der Lenkzylinder 3 und der Zentrierzylinder 7 weisen in dem gezeigten Ausführungsbeispiel dieselben Außendurchmesser und dieselben Innendurchmesser auf. Sowohl der Lenkzylinder 3 als auch der Zentrierzylinder 7 sind als doppelt wirkende Hydrozylinder ausgebildet. In dem Gehäuse 18 des Steuerzylinders 2 ist in Betrachtungsrichtung der Fig. 1a bis 1f an einem linken axialen Ende 35 ein Befestigungsflansch 36 mit einem Auge 37 zur schwenkbaren Befestigung des Steuerzylinders 2 an der betreffenden Zusatz-Lenkachse angeordnet.

Endseitig an einer gemeinsamen Kolbenstange 17 ist ein Lenkkolben 4 axial verfahrbar in dem Lenkzylinder 3 angeordnet. Der Lenkkolben 4 ist einstückig mit der Kolbenstange 17 gebildet. Der Lenkkolben 4 trennt zwei Arbeitsräume 5, 6 in dem Lenkzylinder 3. In Betrachtungsrichtung der Fig.1a bis 1f erstreckt sich die Kolbenstange 17 von dem Lenkkolben 4 durch eine Gehäusetrennwand 19 zwischen dem Lenkzylinder 3 und dem Zentrierzylinder 7, wobei die Kolbenstange 17 in einer dichtenden Gleitpassung in der Gehäusetrennwand 19 geführt ist. Die Kolbenstange 17 durchragt mittig axial den gesamten Zentrierzylinder 7 und dessen in Betrachtungsrichtung der Fig. 1a bis 1f rechten Zylinderwand 38 und weist ein freies Ende mit einem Auge zum Anschluss der Kolbenstange 17 an eine Spurstange auf.

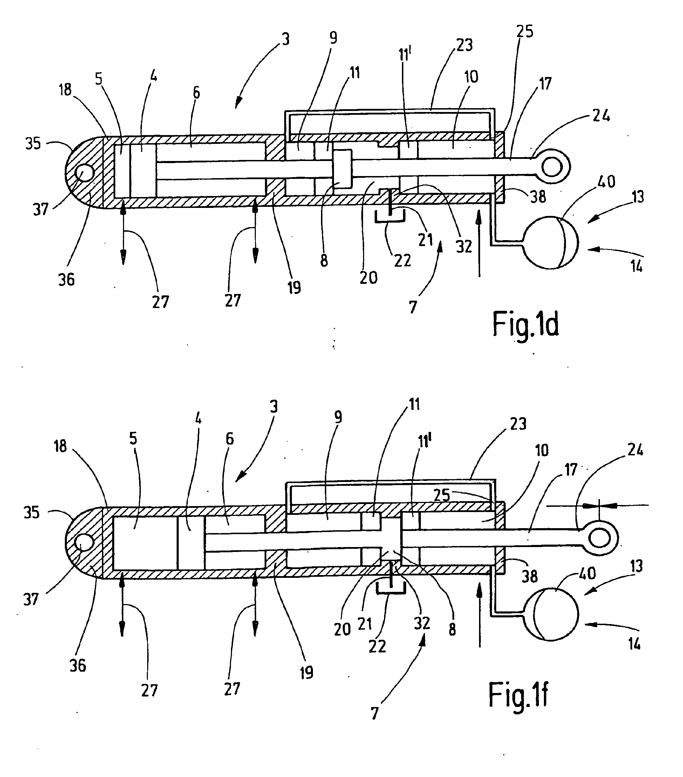

In den Fig.1a und 1f ist die Kolbenstange 17 in einer neutralen Mittenposition dargestellt. In dieser Verfahrposition der Kolbenstange 17 befindet sich auch ein fest auf ihr angeordneter Zentrierkolben 8 in dem Zentrierzylinder 7 in seiner axialen Mittenposition. Der Zentrierkolben 8 weist einen geringeren Außendurchmesser als der Innendurchmesser des Zentrierzylinders 7 auf. Der Zentrierkolben 8 ist hierbei in einer Mittenkammer 20 des Zentrierzylinders 7 positioniert. Die radialen Zylinderwände des Zentrierzylinders 7 weisen im Axialbereich der Mittenkammer 20 nasenartige, einen Mittenanschlag 32 für zwei Schleppkolben 11, 11' definierende Ausstülpungen zu beiden Seiten des Zentrierkolbens 8 auf. Die Schleppkolben 11, 11' sind in den Fig.1a und 1f an den Zentrierkolben 8 anliegend gezeigt. Die Schleppkolben 11, 11' sind axial verfahrbar und mit einem dichtenden Gleitsitz auf der Kolbenstange 17 positioniert. Im Axialbereich des Zentrierzylinders 7 zwischen der Gehäusetrennwand 19 und dem, in Betrachtungsrichtung der Figuren, linken Schleppkolben 11 spannt sich ein erster Schleppraum 9 des Zentrierzylinders 7 auf. Ein zweiter Schleppraum 10 spannt sich zwischen dem rechten Schleppkolben 11' und der zylinderseitigen Zylinderstirnwand 38 des Zentrierzylinders 7 auf.

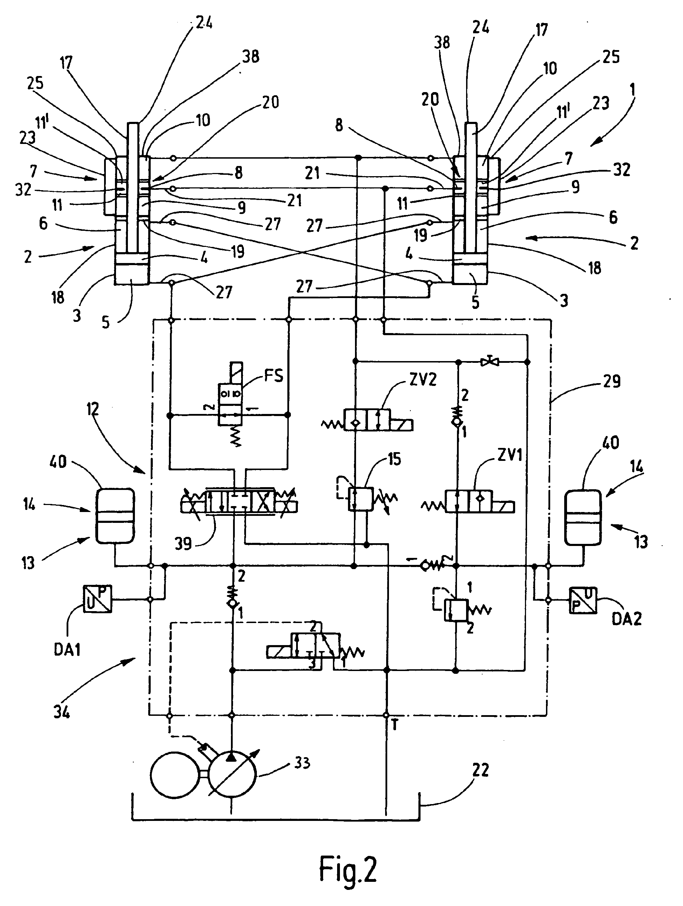

Die beiden Schleppräume 9, 10 werden durch eine Ausgleichsleitung 23, die jeweils an der Gehäusetrennwand 19 bzw. an der stirnseitigen Zylinderwand 38 in die Schleppräume 9, 10 mündet, fluidisch verbunden. Die Ausgleichsleitung 23 mündet dabei in der Weise in die Schleppräume 9, 10, dass in jeder Verfahrstellung der Schleppkolben 11, 11' eine fluidführende Verbindung zwischen den betreffenden Schleppräumen sichergestellt ist. Der Fluiddruck in beiden Schleppräumen 9, 10 wird durch eine Druckregeleinrichtung 13, die wiederum von einer in der Fig.2 gezeigten Steuereinrichtung 12 ansteuerbar ist, mit einem Vorspanndruck im Störfall der Steuerungsvorrichtung 1 beaufschlagt. In den Fig.1b und 1c ist die Druckregeleinrichtung 13 durch ein Druckregelventil 15, welches den Fluiddruck einer als Druckmittelpumpe 33 gebildeten Druckmittelquelle 14 auf den Schleppraum 10 regelt, dargestellt.

In Fig.1b ist die Funktionsweise des Steuerzylinders 2 bei einer Verfahrbewegung seines Lenkkolbens 4 in Betrachtungsrichtung nach rechts und in Fig.1c bei einer Verfahrbewegung des Lenkkolbens 4 in Betrachtungsrichtung der Figur nach links dargestellt. Die gewünschte Verfahrgeschwindigkeit der Kolbenstange 17 ist im Fall der Notwendigkeit der Zentrierung einstellbar. Dadurch läßt sich die Lenkgeschwindigkeit an von dem Steuerzylinder 2 gelenkten Rädern der Zusatz-Lenkachse einstellen und auf fahrzeugspezifische und auch fahrtspezifische Parameter abstimmen.

Die Funktion der Steuerungsvorrichtung 1 und deren Steuerzylinder 2 ist in den Fig.1b bis 1f gezeigt. In Fig. 1b ist eine Verfahrbewegung der Kolbenstange 17 und des Lenkkolbens 4 in Betrachtungsrichtung nach rechts gezeigt. Diese Verfahrbewegung wird durch Druckmittelzufuhr in den Arbeitsraum 5 des Lenkzylinders 3 und Druckmittelabfuhr aus dem Arbeitsraum 6 des Lenkzylinders 3 bewirkt. Die jeweilige Druckmittelzufuhr bzw. -abfuhr ist gesteuert durch ein in Fig. 2 gezeigtes Lenkventil 39, das als 4/3-Proportionalventil mit geschlossener Mitte ausgebildet ist. Bei dieser Verfahrbewegung des Lenkkolbens 4 und der Kolbenstange 17 wird in dem Zentrierzylinder 7 der Zentrierkolben 8 in gleicher Weise nach rechts verfahren, wodurch der Schleppkolben 11' ebenso, in Anlage an den Zentrierkolben 8, nach rechts verfahren wird. Der Schleppkolben 11 hingegen verbleibt in seiner in Fig.1a gezeigten Position in Anlage an dem Mittenanschlag 32. Druckmittel wird dabei aus dem Schleppraum 10 über das vorgesteuerte Druckreduzierventil 16 in einen Tank 22 gelenkt. Zeitgleich wird aus dem Tank 22 über eine fluidführende Verbindung 21, die radial durch die Zylinderwand des Zentrierzylinders im Axialbereich der Mittenkammer 20 geführt ist, Druckmittel aus dem Tank 22 entnommen und der Mittenkammer 20 zugeführt. In dem Schleppraum 10 verbleibt hierbei ein Restdruck, der sinnfällig durch das Druckreduzierventil 16 einstellbar ist.

In Fig.1c ist die Kolbenstange 17 in einer annähernd in Betrachtungsrichtung der Figur linken Endposition mit ihrem Lenkkolben 4 gezeigt. Dabei ist Druckmittel von dem Lenkventil 39 in den Arbeitsraum 6 gelenkt und aus dem Arbeitsraum 5 des Lenkzylinders abgeführt. Der Zentrierkolben 8 nimmt bei dieser Verfahrbewegung den Schleppkolben 11 in eine linke, das Volumen des Schleppraums 9 reduzierende Position mit, während der Schleppkolben 11' in seine in Fig. 1a gezeigten Position mittels des Restdruckes in dem Schleppraum 10 verbracht ist. Der Schleppkolben 11' liegt hierbei an dem Mittenanschlag 32 an. Das Volumen der Mittenkammer 20 bleibt hierbei unverändert.

Die Fig.1d zeigt die Betriebssituation der Steuerungsvorrichtung in einem Störfall, bei dem die Beaufschlagung der Arbeitsräume 5, 6 des Lenkzylinders über jeweils eine Fluidleitung 27 vom Lenkventil 39 kommend drucklos geschaltet ist. Die Druckmittelquelle 14, die die Schleppräume 9, 10 an einer Anschlussstelle 25 des Zentrierzylinders vorspannt, ist hier als Druckspeicher 40 ausgeführt. In dem gezeigten Ausführungsbeispiel ist dies ein Kolbendruckspeicher. Die Anschlussstelle 25 ist dem freien Ende 24 der Kolbenstange 17 benachbart. Beaufschlagt nun der Druckspeicher 40 den Schleppraum 10 mit Druckmittel, so pflanzt sich der Druck über den Schleppraum 10 und die Ausgleichsleitung 23 in den Schleppraum 9 fort. Dadurch wird der in Betrachtungsrichtung linke Schleppkolben 11 in Anlage an den Zentrierkolben 8 gehalten und nimmt den Zentrierkolben 8 in die in Fig.1f gezeigte mittlere Neutralstellung bis zum Anschlag des Schleppkolbens 11 an den Mittenanschlag 32 mit. Druckmittel wird hierbei aus der Mittenkammer 20 in den Tank 22 abgeführt, die Kolbenstange 17 nebst Lenkkolben 4 in die gezeigte mittlere Neutralposition verbracht. Die über Spurstangen und Radlenkhebel mit der Kolbenstange 17 verbundenen gelenkten Räder der Zusatz-Lenkachse nehmen eine neutrale Lenkposition ein. Zu diesem Verfahrvorgang des Zentrierkolbens bedarf es lediglich der Zufuhr von Druckmittel in den linken Schleppraum 9, somit der Zufuhr eines vergleichsweise geringen Druckmittelvolumens aus dem Druckspeicher 40. Denselben Zentriervorgang ist auch die Anordnung in den Fig. 1a bis 1c in der Lage auszuführen. Hierbei wird anstelle des Druckmittels aus dem Druckspeicher 40 Druckmittel von der Druckmittelpumpe 33 aus dem Tank 22 über das Druckreduzierventil 16 in den linken Schleppraum 9 gepreßt, und dieselbe Verfahrbewegung, wie dargestellt, in Fig. 1f bewirkt. In Blickrichtung auf die Fig. 2 gesehen, ist also der rechte Druckspeicher 40 derjenige, dem die Aufgabe als Zentrierspeicher zukommt. Der links dargestellte Druckspeicher 40 dient dann als sogenannter Lenkspeicher.

Die Fig. 2 zeigt die Steuerungsvorrichtung 1, eingebunden in eine, eine einkanalige Sicherheitsfunktion darstellende Testeinrichtung 34. In dem gezeigten Ausführungsbeispiel sind zwei Steuerzylinder 2, auf eine gelenkte Zusatz-Lenkachse wirkend, dargestellt. Die Steuerungsvorrichtung 1 ist um ein schaltendes Wegeventil FS, welches die Fluidleitungen 27 zur Druckmittelversorgung der Arbeitsräume 5, 6 des Lenkzylinders 3 der jeweiligen Steuerzylinder 2 überbrückt, erweitert. Zusätzlich sind ein schaltendes Wegeventil ZV1 und ein schaltendes Wegeventil ZV2 zwischen die jeweiligen Druckregeleinrichtungen 13 für jeden Zentrierzylinder 7 und einen Schleppraum 10 bzw. der Mittenkammer 20 vorgesehen. Die genannten Ventile dienen zur Überprüfung der Dichtheit des Lenkzylinders 3 bzw. des Zentrierzylinders 7 und einer korrekten Abdichtfunktion der darin verfahrbar gehaltenen Schleppkolben. In einem ersten Verfahrensschritt zur Überprüfung der Funktionstüchtigkeit der Steuerungsvorrichtung 1 ist zunächst ein in einer Ruheposition unbestromtes und federzentriertes Ventil ZV1 auf Durchgang geschaltet. Das ebenfalls elektromagnetisch angesteuerte Ventil ZV2 ist in seiner Ruheposition federzentriert in eine Sperrstellung geschaltet. Das die beiden Fluidleitungen 27 überbrückende Ventil FS ist in seiner unbestromten, federzentrierten Ruheposition auf Durchgang geschaltet. In einem ersten Verfahrensschritt des Tests wird nun das Ventil ZV1 und das Ventil ZV2 bestromt, während das Ventil FS unbestromt bleibt. Das Lenkventil 39 wird hiermit definiert geöffnet. Hierbei wird der Druckabfall zwischen der Druckregeleinrichtung 13, genauer zwischen der Anschlussstelle 25 und den beiden Zentrierzylindern 7 von einem Drucksensor DA1 gemessen.

In einem zweiten Verfahrens- oder Testschritt wird nun das Ventil FS bestromt, das Lenkventil 39 und die Ventile ZV1 und ZV2 sind unbestromt. Der Druckabfall am Zentrierspeicher 40 wird hierbei durch einen zweiten Drucksensor DA2 gemessen.

In einem dritten Verfahrensschritt wird das Ventil FS bestromt, das Ventil ZV2 ist unbestromt, das Lenkventil 39 und das Ventil ZV1 bleiben unbestromt. Hierbei wird wiederum der Druckabfall an dem Sensor DA2 gemessen. Eine Steuer- und/oder Regelungseinrichtung 29 steuert hierbei vorzugsweise den Test automatisch. Ferner dient die Steuerungs- und/oder Regelungseinrichtung 29 zur Ausgabe der Testergebnisse. Ist einer der drei genannten Testfälle negativ, so ist durch die Steuer- und/oder Regelungseinrichtung 29 gewährleistet, dass bei einem Start des Fahrzeugs bzw. bei einem Fahrtbeginn der Steuerzylinder 2 für die betreffende Zusatz-Lenkachse außer Funktion verbleibt. Die von dem Steuerzylinder 2 gelenkten Räder verbleiben dabei in einer neutralen Mittenposition. Mit dem vorgestellten Testverfahren können nicht nur die Lenkzylinder und Zentrierzylinder auf Dichtheit überprüft werden, sondern auch alle in den Steuervorgang involvierten Ventile auf korrekte Funktion überprüft werden. Bei einer bevorzugten Ausführungsform sind, wie dargestellt, die Steuer- und Lenkzylinder in einem Zylindergehäuse zusammengefasst realisiert; es besteht aber auch die Möglichkeit Steuer- und Lenkzylinder voneinander getrennt und nur wirkverbunden, beispielsweise über Fluidleitungen und/oder mechanische Koppelungen miteinander zu verbinden.

## Patentansprüche

1. Steuerungsvorrichtung zur Steuerung zumindest eines hydraulischen Steuerzylinders (2), insbesondere für die Lenkung bei einem Fahrzeug mit einem Lenkzylinder (3), der von einem Lenkkolben (4) in zwei Arbeitsräume (5, 6) unterteilt ist, und mit einem Zentrierzylinder (7), der über einen Zentrierkolben (8) in zwei Schleppräume (9, 10) unterteilt ist, in denen jeweils ein Schleppkolben (11, 11') geführt ist und die fluidführend miteinander verbindbar sind, wobei der Zentrierkolben (8) über den Lenkkolben (4) mittels einer Steuereinrichtung (12) ansteuerbar ist, wobei zumindest einer der Schleppräume (9, 10) an eine Druckregeleinrichtung (13) anschließbar ist, die neben einer Druckmittelquelle (14) ein Druckregelventil (15) aufweist, wobei das Druckregelventil (15) der Druckregeleinrichtung (13) ein Druckreduzierventil (16) ist, und wobei Druckmittel aus den Schleppräumen (9, 10) über das Druckreduzierventil (16) in einen Tank (22) lenkbar ist, **dadurch gekennzeichnet, dass** das Druckreduzierventil ein vorgesteuertes Druckreduzierventil ist.

2. Steuerungsvorrichtung nach Anspruch 1, **dadurch gekennzeichnet, dass** die Druckregeleinrichtung (13) im Sinne einer Vorspannung zumindest einen der Schleppräume (9, 10) mit einem Vorspanndruck beaufschlagt.

3. Steuerungsvorrichtung nach einem der vorhergehenden Ansprüche, **dadurch gekennzeichnet, dass** die Steuereinrichtung (12) aus einer Kolbenstange (17) gebildet ist, die den Lenkkolben (4) mit dem Zentrierkolben (8) fest verbindet.

4. Steuerungsvorrichtung nach einem der vorhergehenden Ansprüche, **dadurch gekennzeichnet, dass** der Zentrierzylinder (7) und der Lenkzylinder (3) als Bestandteil des Steuerzylinders (2) ein gemeinsames Gehäuse (18) aufweisen, und in Bewegungsrichtung der Kolbenstange (17) gesehen, hintereinander angeordnet sind und dass die Arbeitsräume (5, 6) des Lenkzylinders (3) von den Schleppräumen (9, 10) des Zentrierzylinders (7) über eine Gehäusetrennwand (19) voneinander separiert sind, die von der Kolbenstange (17) in jeder ihrer Verfahrstellungen durchgriffen ist.

5. Steuerungsvorrichtung nach einem der vorgehenden Ansprüche, **dadurch gekennzeichnet, dass** in dem jeweiligen Schleppraum (9, 10) des Zentrierzylinders (7) ein Schleppkolben (11, 11') angeordnet ist und dass sich zwischen den Schleppkolben (11, 11') der Zentrierkolben (8) des Zentrierzylinders (7) befindet.

6. Steuerungsvorrichtung nach einem der vorgehenden Ansprüche, **dadurch gekennzeichnet, dass** in einer Neutralstellung von Lenk- und Zentrierzylinder (3, 7) die Schleppräume (9, 10) des Zentrierzylinders (7) im Wesentlichen gleiche Volumina einnehmen.

7. Steuerungsvorrichtung nach einem der vorhergehenden Ansprüche, **dadurch gekennzeichnet, dass** der Zentrierkolben (8) in der Neutralstellung in einer Mittenkammer (20) des Gehäuses (18) angeordnet ist, die eine fluidführende Verbindung mit einem Tank (22) aufweist.

8. Steuerungsvorrichtung nach einem der vorhergehenden Ansprüche, **dadurch gekennzeichnet, dass** die beiden Schleppräume (9, 10) des Zentrierzylinders (7) über eine Ausgleichsleitung (23) derart miteinander in Verbindung stehen, dass in jeder Verfahrstellung der Schleppkolben (11, 11') eine fluidführende Verbindung hergestellt ist.

9. Steuerungsvorrichtung nach einem der vorhergehenden Ansprüche, **dadurch gekennzeichnet, dass** der jeweilige Schleppraum (9, 10), der dem freien Ende der Kolbenstange (17) zugeordnet ist, jeweils eine Anschlussstelle (25) für das Druckregelventil (15) und die Druckmittelquelle (14) aufweist.

10. Steuerungsvorrichtung nach einem der vorhergehenden Ansprüche, **dadurch gekennzeichnet, dass** der Lenkkolben (4) und die Schleppkolben (11, 11') im Wesentlichen denselben Außendurchmesser aufweisen und dass in der genannten Neutralstellung von Lenk- und Zentrierzylinder (3, 7) alle Arbeitsräume (5, 6) und alle Schleppräume (9, 10) im Wesentlichen das gleiche Fluidvolumen aufweisen.

11. Steuerungsvorrichtung nach einem der vorhergehenden Ansprüche, **dadurch gekennzeichnet, dass** die Arbeitsräume (5, 6) über jeweils eine Fluidleitung (27) an eine Druckmittel-Versorgungseinheit (33) angeschlossen sind.

12. Steuerungsvorrichtung nach einem der vorhergehenden Ansprüche, **dadurch gekennzeichnet, dass** eine Steuer- und/oder Regelungseinrichtung (29) vorgesehen ist, die in Abhängigkeit von Signalen von Sensoren zur Positionsüberwachung einer Hauptlenkachse und von Fahrt- und Fahrzeugparametern des Fahrzeugs den hydraulischen Steuerzylinder (2) oder eine Mehrzahl an hydraulischen Steuerzylindern (2) ansteuert.

13. Steuerungsvorrichtung nach einem der vorhergehenden Ansprüche, **dadurch gekennzeichnet, dass** bei einer Fehlfunktion der Steuerungsvorrichtung (1) zumindest ein Schleppraum (9, 10) des Zentrierzylinders (7) mit Druckmittel durch die Druckregeleinrichtung (13) beaufschlagt ist und dass der betreffende Schleppkolben (11, 11') in dem Schleppraum (9, 10) an den Zentrierkolben (8) angelegt und unter Mitnahme der Kolbenstange (17) an einen Mittenanschlag (32) der Mittenkammer (20) des Zentrierzylinders(7), der eine Neutralstellung der Kolbenstange (17) definiert, angelegt ist.

14. Steuerungsvorrichtung nach einem der vorhergehenden Ansprüche, **dadurch gekennzeichnet, dass** die Druckmittelquelle (14) der Druckregel-einrichtung (13) eine Druckmittelpumpe (33) oder ein Druckspeicher (40) ist.

15. Steuerungsvorrichtung nach einem der vorhergehenden Ansprüche, **dadurch gekennzeichnet, dass** die Steuerungsvorrichtung (1) eine Testeinrichtung (34) zur Darstellung zumindest einer einkanaligen Sicherheitsfunktion gemäß dem SIL2-Standard umfasst, wobei alle Ventile (39, FS, ZV1, ZV2) der Steuerungsvorrichtung und die Leckagefreiheit des Steuerzylinders (2) überprüft sind.

## Claims

1. A control device for controlling at least one hydraulic control cylinder (2), in particular for the steering in a vehicle having a steering cylinder (3), which control cylinder is divided into two working chambers (5, 6) by a steering piston (4), and comprising a centring cylinder (7) which is divided into two trailing chambers (9, 10) by a centring piston (8), in which trailing chambers a respective trailing piston (11, 11') is guided and which trailing chambers are connected to one another such as to convey fluid, the centring piston (8) being controllable via the steering piston (4) by means of a control device (12), at least one of the trailing chambers (9, 10) being attachable to a pressure regulating device (13) which has a pressure regulating valve (15) as well as a pressurising medium source (14), the pressure regulating valve (15) of the pressure regulating device (13) being a pressure reducing valve (16), and pressurising medium being able to be conveyed out of the trailing chambers (9, 10) into a tank (22) by means of the pressure reducing valve (16), **characterised in that** the pressure reducing valve is a pilot-operated pressure reducing valve.

2. The control device according to Claim 1, **characterised in that** for the purpose of pre-loading the pressure regulating device (13) applies a pre-load pressure to at least one of the trailing chambers (9, 10).

3. The control device according to any of the preceding claims, **characterised in that** the control device (12) is formed by a piston rod (17) which connects the steering piston (4) securely to the centring piston (8).

4. The control device according to any of the preceding claims, **characterised in that** the centring cylinder (7) and the steering cylinder (3) have a common housing (18) as a component of the control cylinder (2) and, as viewed in the direction of movement of the piston rod (17), are arranged one behind the other, and that the working chambers (5, 6) of the steering cylinder (3) and the trailing chambers (9, 10) of the centring cylinder (7) are separated from one another by means of a housing partition wall (19) through which the piston rod (17) passes in each of its positions.

5. The control device according to any of the preceding claims, **characterised in that** a trailing piston (11, 11') is disposed in the respective trailing chamber (9, 10) of the centring cylinder (7) and that the centring piston (8) of the centring cylinder (7) is located between the trailing pistons (11, 11').

6. The control device according to any of the preceding claims, **characterised in that** in a neutral position of the steering and the centring cylinder (3, 7) the trailing chambers (9, 10) of the centring cylinder (7) adopt substantially the same volumes.

7. The control device according to any of the preceding claims, **characterised in that** in the neutral position the centring piston (8) is disposed in a central chamber (20) of the housing (18) which has a fluid-conveying connection to a tank (22).

8. The control device according to any of the preceding claims, **characterised in that** the two trailing chambers (9, 10) of the centring cylinder (7) are connected to one another by means of a compensating cable (23) such that a fluid-conveying connection is established in every position of the trailing pistons (11, 11').

9. The control device according to any of the preceding claims, **characterised in that** the respective trailing chamber (9, 10) which is assigned to the free end of the piston rod (17) respectively has an attachment point (25) for the pressure regulating valve (15) and the pressure medium source (14).

10. The control device according to any of the preceding claims, **characterised in that** the steering piston (4) and the trailing pistons (11, 11') have substantially the same outside diameter and that in the aforementioned neutral position of the steering and centring cylinders (3, 7) all of the working chambers (5, 6) and all of the trailing chambers (9, 10) have substantially the same fluid volume.

11. The control device according to any of the preceding claims, **characterised in that** the working chambers (5, 6) are attached to a pressurising medium supply unit (33) by a respective fluid line (27).

12. The control device according to any of the preceding claims, **characterised in that** a control and/or regulating device (29) is provided which controls the hydraulic control cylinder (2) or a plurality of hydraulic control cylinders (2) dependently upon signals from sensors for monitoring the position of a main steering axis and upon travel and vehicle parameters of the vehicle.

13. The control device according to any of the preceding claims, **characterised in that** in the event of a malfunction of the control device (1) at least one trailing chamber (9, 10) of the centring cylinder (7) is charged with pressurising medium by the pressure regulating device (13) and that the respective trailing piston (11, 11') in the trailing chamber (9, 10) is placed against the centring piston (8) and, entraining the piston rod (17), is placed against a centre stop (32) of the central chamber (20) of the centring cylinder (7) which defines a neutral position of the piston rod (17).

14. The control device according to any of the preceding claims, **characterised in that** the pressurising medium source (14) of the pressure regulating device (13) is a pressurising medium pump (33) or a pressure accumulator (40).

15. The control device according to any of the preceding claims, **characterised in that** the control device (1) comprises a testing device (34) for displaying at least one single-channel safety function according to the SIL2 standard, all of the valves (39, FS, ZV1, ZV2) of the control device and the freedom from leakage of the control cylinder (2) being checked.

## Revendications

1. Dispositif de commande d'au moins un cylindre (2) de commande hydraulique, notamment pour la direction dans un véhicule ayant un cylindre (3) de direction, qui est subdivisé en deux chambres (5, 6) de travail par un piston (4) de direction, et ayant un cylindre (7) de centrage qui est subdivisé par un piston (8) de centrage en deux chambres (9, 10) de traîne dans lesquelles est guidé respectivement un piston (11, 11') et qui peuvent communiquer entre elles fluidiquement, le piston (8) de centrage pouvant être commandé par le piston (4) de direction au moyen d'un dispositif (12) de commande, dans lequel au moins l'une des chambres (9, 10) de traîne peut être raccordée à un dispositif (13) de régulation de la pression qui a, outre une source (14) de fluide sous pression, une vanne (15) de régulation de la pression, la vanne (15) de régulation de la pression du dispositif (13) de régulation de la pression étant une vanne (16) de réduction de la pression et du fluide sous pression pouvant être envoyé des chambres (9, 10) de traîne dans un réservoir (22) en passant par la vanne (16) de réduction de la pression, **caractérisé en ce que** la vanne de réduction de la pression est une vanne de réduction de la pression pilotée.

2. Dispositif de commande suivant la revendication 1, **caractérisé en ce que** le dispositif (13) de régulation de la pression est soumis à une pression de précontrainte en vue de précontrainte d'au moins l'une des chambres (9, 10) de traîne.

3. Dispositif de commande suivant l'une des revendications précédentes, **caractérisé en ce que** le dispositif (12) de commande est formé d'une tige (17) de piston qui relie fixement le piston (4) de direction au piston (8) de centrage.

4. Dispositif de commande suivant l'une des revendications précédentes, **caractérisé en ce que** le cylindre (7) de centrage et le cylindre (3) de direction ont, en tant que parties constitutives du cylindre (2) de commande, une enveloppe (18) commune et, considéré dans le sens de déplacement de la tige (17) du piston, sont disposés l'un derrière l'autre et **en ce que** les chambres (5, 6) de travail du cylindre (3) de direction sont séparées des chambres (9, 10) de traîne du cylindre (7) de centrage par une cloison (19) de l'enveloppe, qui est traversée par la tige (17) de piston dans chacune de ses positions de déplacement.

5. Dispositif de commande suivant l'une des revendications précédentes, **caractérisé en ce que** dans la chambre (9, 10) de traîne respective du cylindre (7) de centrage est disposé un piston (11, 11') de traîne et **en ce que** le piston (8) de centrage du cylindre (7) de centrage se trouve entre les pistons (11, 11') de traîne.

6. Dispositif de commande suivant l'une des revendications précédentes, **caractérisé en ce que**, dans une position neutre des cylindres (3, 7) de direction et de centrage, les chambres (9, 10) de traîne du cylindre (7) de centrage occupent sensiblement un même volume.

7. Dispositif de commande suivant l'une des revendications précédentes, **caractérisé en ce que** le piston (8) de centrage est, dans la position neutre, mis dans une chambre (20) médiane de l'enveloppe (18), qui a une liaison fluidique avec un réservoir (22).

8. Dispositif de commande suivant l'une des revendications précédentes, **caractérisé en ce que** les deux chambres (9, 10) de traîne du cylindre (7) de centrage communiquent l'une avec l'autre par un conduit (23) de compensation de manière à ménager une liaison fluidique dans chaque position de déplacement des pistons (11, 11') de traîne.

9. Dispositif de commande suivant l'une des revendications précédentes, **caractérisé en ce que** la chambre (9, 10) de traîne respective, qui est associée à l'extrémité libre de la tige (17) de piston, a, respectivement, un point (25) de raccordement pour la vanne (15) de régulation de la pression et pour la source (14) de fluide sous pression.

10. Dispositif de commande suivant l'une des revendications précédentes, **caractérisé en ce que** le piston (4) de direction et les pistons (11, 11') de traîne ont sensiblement le même diamètre extérieur et **en ce que**, dans ladite position neutre des cylindres (3, 7) de direction et de centrage, toutes les chambres (5, 6) de travail et toutes les chambres (9, 10) de traîne ont sensiblement le même volume pour du fluide.

11. Dispositif de commande suivant l'une des revendications précédentes, **caractérisé en ce que** les chambres (5, 6) de travail sont raccordées à une unité (33) d'alimentation en fluide sous pression par respectivement un conduit (27) pour du fluide.

12. Dispositif de commande suivant l'une des revendications précédentes, **caractérisé en ce qu'**il est prévu un dispositif de commande et/ou de régulation qui, en fonction de signaux de capteur de contrôle de position d'un essieu de direction principal et de paramètres de conduite et du véhicule, commande le cylindre (2) de commande hydraulique ou une multiplicité de cylindres (2) commande hydrauliques.

13. Dispositif de commande suivant l'une des revendications précédentes, **caractérisé en ce qu'**en cas d'un fonctionnement défectueux du dispositif (1) de commande, au moins une chambre (9, 10) de traîne du cylindre (7) de centrage est alimentée en fluide sous pression par le dispositif (13) de régulation de la pression et **en ce que** le piston (11, 11') de traîne concerné dans la chambre (9, 10) de traîne est appliqué au piston (8) de centrage et, en entraînant la tige (17) de piston, est appliqué sur une butée (32) médiane de la chambre (20) médiane du cylindre (7) de centrage, qui définit une position neutre de la tige (17) de piston.

14. Dispositif de commande suivant l'une des revendications précédentes, **caractérisé en ce que** la source (14) de fluide sous pression du dispositif (13) de régulation de la pression est une pompe (33) à fluide sous pression où un accumulateur (40) sous pression.

15. Dispositif de commande suivant l'une des revendications précédentes, **caractérisé en ce que** le dispositif (1) de commande comprend un dispositif (34) de test pour la représentation d'au moins une fonction de sécurité à monocanal suivant la norme SIL-2, toutes les vannes (39, FS, ZV1, ZV2) du dispositif de commande et l'absence de fluide du cylindre (2) de commande étant contrôlées.
